# EUROPÄISCHE PATENTSCHRIFT

(11) **EP 2 516 218 B1**
(45) Veröffentlichungstag und Bekanntmachung des Hinweises auf die Patenterteilung: **27.05.2015**
(21) Anmeldenummer: 10778900.0
(22) Anmeldetag: 25.10.2010
(51) Int. Cl.: B60S 1/08, H02H 7/085

(54) **WISCHERSTEUERUNG**
WIPER CONTROLLER
COMMANDE D'ESSUIE-GLACE

(30) Priorität: 22.12.2009 DE 102009055169
(43) Veröffentlichungstag der Anmeldung: 31.10.2012
(73) Patentinhaber: Robert Bosch GmbH, 70442 Stuttgart (DE)
(72) Erfinder: ZIMMER, Joachim, Changsha Hunan 410100 (CN)
(86) Internationale Anmeldenummer: PCT/EP2010/066027
(87) Internationale Veröffentlichungsnummer: WO 2011/076460

(56) Entgegenhaltungen:
- EP-A1- 1 168 591
- DE-A1- 4 104 565
- DE-A1- 4 431 699
- DE-A1- 10 144 985
- DE-A1- 19 634 559
- FR-A1- 2 541 639

## Beschreibung

### Stand der Technik

Wischersysteme, wie sie beispielsweise an Kraftfahrzeugen Verwendung finden, haben die Aufgabe, Wischblätter über eine Sichtscheibe zu führen, um diese von Feuchtigkeit und Verschmutzungen zu befreien. Üblicherweise folgen die Wischblätter einer oszillierenden Bewegung in einem Kreissegment. Ist die Sichtscheibe nass und liegen keine Fremdkörper auf der Sichtscheibe vor, so muss nur ein relativ geringes Antriebsmoment von dem Wischersystem bereitgestellt werden. Gelegentlich befinden sich jedoch Hindernisse auf der Sichtscheibe, wie beispielsweise komprimierter Schnee an einem Ende des Kreissegments. In diesem Fall muss das Wischersystem ein hohes Antriebsmoment bereitstellen und eine verschleißfördernde Belastung des Wischersystems ist hoch.

In der DE 101 44 985 A1 wird vorgeschlagen, ein Antriebsmoment, das von dem Wischersystem bereitgestellt wird, in Abhängigkeit einer Stellung der Wischblätter zu begrenzen. Dadurch können Lastspitzen begrenzt und eine Überlastung des Wischersystems vermieden werden.

DE 41 04 565 A1 betrifft eine Wischervorrichtung, die dazu eingerichtet ist, ihre Drehrichtung zu ändern, falls eine Stromaufnahme eines elektrischen Antriebsmotors einen vorbestimmten Schwellenwert übersteigt.

FR 2 541 639 A1 zeigt eine weitere Wischervorrichtung, die dazu eingerichtet ist, zu reversieren, falls ihr elektrischer Antriebsmotor eine überhöhte Stromaufnahme aufweist.

Der Erfindung liegt die Aufgabe zugrunde, eine Steuerung für eine Scheibenwischvorrichtung und ein Verfahren zur Steuerung einer Scheibenwischvorrichtung anzugeben, die eine Überlastung der Scheibenwischvorrichtung reduzieren und so eine Lebensdauer der Scheibenwischvorrichtung verlängern können.

### Offenbarung der Erfindung

Die Erfindung löst dieses Problem durch eine Steuerung und ein Verfahren mit den Merkmalen der unabhängigen Ansprüche. Unteransprüche geben vorteilhafte Ausführungsformen an.

Der Erfindung liegt eine Scheibenwischvorrichtung zugrunde, die eine Antriebseinrichtung und ein Getriebe umfasst, wobei das Getriebe die Bewegung der Antriebseinrichtung auf eine Wischerwelle überträgt. Erfindungsgemäß ist eine Vergleichseinrichtung vorgesehen, um zu, ob das von der Antriebseinrichtung abgegebene Drehmoment das vorbestimmte Drehmoment öfter als eine vorbestimmte Häufigkeit übersteigt, wobei das vorbestimmte Drehmoment und die Häufigkeit von der Stellung der Wischerwelle abhängig sind. Ferner umfasst die Scheibenwischvorrichtung eine Umkehreinrichtung zum Umkehren der Drehrichtung der Antriebseinrichtung in Abhängigkeit des Ergebnisses der Vergleichseinrichtung.

Ein Abbau von Belastungsspitzen auf die Scheibenwischvorrichtung kann auf diese Weise in Abhängigkeit der Stellung der Wischerwelle durchgeführt werden. So kann insbesondere eine ungleichförmige Übertragungscharakteristik des Getriebes bezüglich einer Stellung der Wischerwelle beim Abbau der Belastungsspitzen berücksichtigt werden. Durch die Umkehrung der Drehrichtung werden Bereiche vom Wischen ausgespart, in denen Hindernisse vorliegen, die aufgrund der ungleichförmigen Übertragungscharakteristik eine besonders starke Belastungserhöhung auf die Scheibenwischvorrichtung haben. Vorteilhafterweise ist die Steuerung auch für Scheibenwischvorrichtungen mit einem Getriebe mit gleichförmiger Übertragungscharakteristik einsetzbar. Durch die Umkehrung der Drehrichtung kann eine Zeitdauer eines hohen Blockiermoments reduziert sein, was die Lebenserwartung der Scheibenwischvorrichtung erhöhen kann. Durch die Berücksichtigung der vorbestimmten Häufigkeit führen zufällige beziehungsweise vorübergehende Belastungsspitzen nicht unbedingt zu einem frühzeitigen Umkehren der Drehrichtung der Antriebseinrichtung, so dass ein ungewischter Bereich nicht unnötig verkleinert wird. Vorzugsweise ist einem hohen vorbestimmten Drehmoment eine niedrige vorbestimmte Häufigkeit zugeordnet. Die gesamte Scheibenwischvorrichtung kann so vor Belastungsspitzen geschützt werden, was eine Lebensdauer der Scheibenwischvorrichtung verlängern kann.

Des Weiteren kann bestimmt werden, ob das Drehmoment der Antriebseinrichtung das vorbestimmte Drehmoment länger als eine vorbestimmte Zeit übersteigt. In ähnlicher Weise wie oben ausgeführt kann dadurch ein Abbau derjenigen Lastspitzen gefördert werden, die eine Lebensdauer der Scheibenwischvorrichtung in besonderem Maße verkürzen können. Vorzugsweise ist einem hohen vorbestimmten Drehmoment eine kurze vorbestimmte Zeit zugeordnet.

Die beschriebene Vorgehensweise kann dadurch unterstützt sein, dass das von der Antriebseinrichtung abgebbare Drehmoment auf ein weiteres von der Stellung der Wischerwelle abhängiges vorbestimmtes Drehmoment begrenzt ist.

Durch diese Kombination kann eine Systembelastung der Scheibenwischvorrichtung deutlich gleichmäßiger gemacht werden, wodurch eine insgesamte Lebenserwartung der Scheibenwischvorrichtung steigt und eine Dimensionierung von Elementen der Scheibenwischvorrichtung besser möglich ist. Zudem können Elemente gegebenenfalls schwächer dimensioniert werden, ohne eine projektierte Lebensdauer der Scheibenwischvorrichtung zu gefährden.

### Kurze Beschreibung der Figuren

Im Folgenden wird die Erfindung mit Bezug auf die beigefügten Figuren genauer beschrieben, in denen:
- Fig. 1 ein Scheibenwischsystem;
- Fig. 2 ein Diagramm von Kräfte- bzw. Momentenverläufen an der Scheibenwischvorrichtung aus Fig. 1;
- Fig. 3 ein Ablaufdiagramm eines Verfahrens zur Steuerung der Scheibenwischvorrichtung aus Fig. 1; und
- Fig. 4 Vergleichsgrundlagen für das Verfahren aus Fig. 3 an der Scheibenwischvorrichtung aus Fig. 1
zeigen.

### Genaue Beschreibung von Ausführungsformen

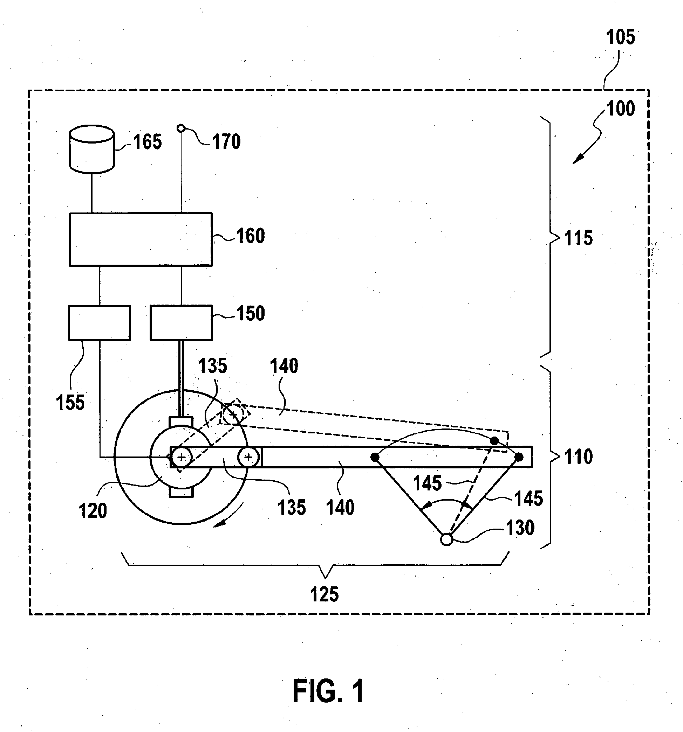

Fig. 1 zeigt ein Scheibenwischsystem 100 an Bord eines Kraftfahrzeugs 105. Das Scheibenwischsystem 100 umfasst eine Scheibenwischvorrichtung 110 und eine Steuerung 115. Die Scheibenwischvorrichtung 110 umfasst eine Antriebseinrichtung 120, ein Getriebe 125 und eine Wischerwelle 130. Das Getriebe 125 wird durch eine Antriebskurbel 135, ein Gestänge 140 und einen Abtriebshebel 145 gebildet. Das Getriebe 125 kann weitere Getriebeelemente aufweisen, insbesondere ein nicht dargestelltes Stirnradgetriebe, das eine Drehbewegung der Antriebseinrichtung 120 auf die Antriebskurbel 135 untersetzt.

Im Betrieb des Scheibenwischvorrichtung 110 dreht die Antriebseinrichtung 120 die Antriebskurbel 135, so dass die Schubstange 140 den Abtriebshebel 145 um die Wischerwelle 130 oszillierend in einem Kreissegment führt. Für diese Betätigung ist es unerheblich, in welcher Richtung die Antriebskurbel 135 von der Antriebseinrichtung 120 gedreht wird.

Nicht in Fig. 1 dargestellt ist ein Wischerarm, der mit der Wischerwelle 130 verbunden ist und ein Wischerblatt über eine Sichtscheibe des Kraftfahrzeugs 105 führt. Gestrichelt dargestellt sind die Antriebskurbel 135, das Gestänge 140 und die Abtriebskurbel 145 in einer ersten Stellung. In einer zweiten Stellung sind die Antriebskurbel 135, das Gestänge 140 und der Abtriebshebel 145 mit durchgezogenen Linien dargestellt. Die zweite Stellung entspricht der am weitesten ausgelenkten Stellung der Wischerwelle 130 an einer Parkstellung der Wischerblätter. Hier liegen die Antriebskurbel 135 und das Gestänge 140 in einer Linie in einer Streckstellung. Eine weitere Streckstellung nimmt das Getriebe 125 ein, wenn die Antriebskurbel 135 um 180° aus der ersten Streckstellung weitergedreht wird. In den Streckstellungen kann eine Belastung der Scheibenwischvorrichtung und insbesondere des Getriebes 125 besonders hoch sein, da das Getriebe 125 ein von der Antriebseinrichtung 120 abgegebenes Drehmoment mit einer Untersetzung überträgt, die von der Stellung der Antriebskurbel 135 abhängig ist.

Die Steuerung 115 umfasst eine mit der Antriebseinrichtung 120 verbundene Ansteuerung 150, einen Abtaster 155, der z. B. mit der Antriebseinrichtung 120 oder dem Getriebe 125 verbunden ist, eine Verarbeitungseinrichtung 160, einen Speicher 165 und eine Schnittstelle 170, wobei die Verarbeitungseinrichtung 160 jeweils mit der Ansteuerung 150, dem Abtaster 155, dem Speicher 165 und der Schnittstelle 170 verbunden ist. Die Schnittstelle 170 ist mit einem Bedienelement an Bord des Kraftfahrzeugs 105 verbunden, so dass ein Fahrer des Kraftfahrzeugs 105 die Operation der Steuerung 115 bzw. des Scheibenwischersystems 100 in geeigneter Weise beeinflussen kann.

Im Speicher 165 sind Zusammenhänge zwischen einer Stellung der Antriebskurbel 135 und weiteren Parametern an der Scheibenwischvorrichtung 110 abgelegt, wie unten genauer erläutert wird. Der Abtaster 155 bestimmt die Stellung der Antriebskurbel 135 bzw. der Wischerwelle 130 beispielsweise durch Inkrementieren bzw. Dekrementieren eines Positionszählers in Abhängigkeit von einer Bewegung von Zahnflanken eines Getriebes der Antriebseinrichtung 120. In anderen Ausführungsformen kann die Stellung der Wischerwelle 130 auch auf andere Arten bestimmt werden, beispielsweise auf der Basis einer bekannten Bewegungsgeschwindigkeit und Bewegungsrichtung eines Elements des Getriebes 125 oder beispielsweise durch Abtasten mittels eines dedizierten Stellungssensors an Stelle des Abtasters 155. Wahlweise kann auch eine Stellung des Wischerarms oder Wischerblattes bestimmt werden.

Mittels der Ansteuerung 150 kann die Antriebseinrichtung 120 dazu angesteuert werden, sich in eine beliebige Richtung mit einer von mehreren vorbestimmten Geschwindigkeiten zu drehen. Die Antriebseinrichtung 120 ist elektrisch betrieben und ein von ihr aufgenommener Strom und/oder eine anliegende Spannung werden in der Ansteuerung 150 abgetastet und als Maß für das von der Antriebseinrichtung 120 abgegebene Drehmoment an die Verarbeitungseinrichtung 160 bereitgestellt.

Die Verarbeitungseinrichtung 160 ist dazu ausgebildet, die Antriebseinrichtung 120 derart anzusteuern, dass Belastungsspitzen auf die Scheibenwischvorrichtung 110 so gut wie möglich vermieden werden, ohne eine Wischleistung des Scheibenwischersystems 100 zu gefährden.

Das Getriebe 125 überträgt das von der Antriebseinrichtung 120 abgegebene Drehmoment ungleichförmig auf die Wischerwelle 130. Bei einem konstanten von der Antriebseinrichtung 120 abgegebenen Drehmoment ist in der mit gestrichelten Linien gezeigten ersten Stellung der Antriebskurbel 135, des Gestänges 140 und des Abtriebshebels 135 das auf die Wischerwelle 130 ausgewirkte Drehmoment kleiner als in der mit durchgezogenen Linien dargestellten zweiten Stellung der Antriebskurbel 135, des Gestänges 140 und des Abtriebshebels 145. Diese ungleichförmige Übertragung von Kräften, und diejenigen Stellungen der Wischerwelle 130, in der hohe Belastungen auf die Scheibenwischeinrichtung 110 auftreten können sind, sind bei der Ansteuerung der Scheibenwischvorrichtung 110 durch die Steuerung 115 zu berücksichtigen.

In einer anderen, nicht dargestellten Ausführungsform besteht das Getriebe 125 aus Elementen, die eine gleichförmige Übertragung des von der Antriebseinrichtung 120 abgegebenen Drehmoments ermöglichen (Wischer-Direkt-Antrieb, WDA). Diese Elemente können beispielsweise ein Stirnradgetriebe umfassen. Bei einer solchen Anordnung wird üblicherweise die Drehrichtung der Antriebseinrichtung 120 unabhängig von einem abgegebenen Drehmoment immer dann umgekehrt, wenn die Wischerwelle 130 eine Endposition des Kreissegments erreicht hat. Hier ist die Last auf die Antriebseinrichtung 120 bei allen Stellungen der Wischerwelle 130 konstant; trotzdem kann bei Erkennen einer hohen Belastung durch Umkehren der Drehrichtung die Zeitdauer des hohen Blockiermoments reduziert sein.

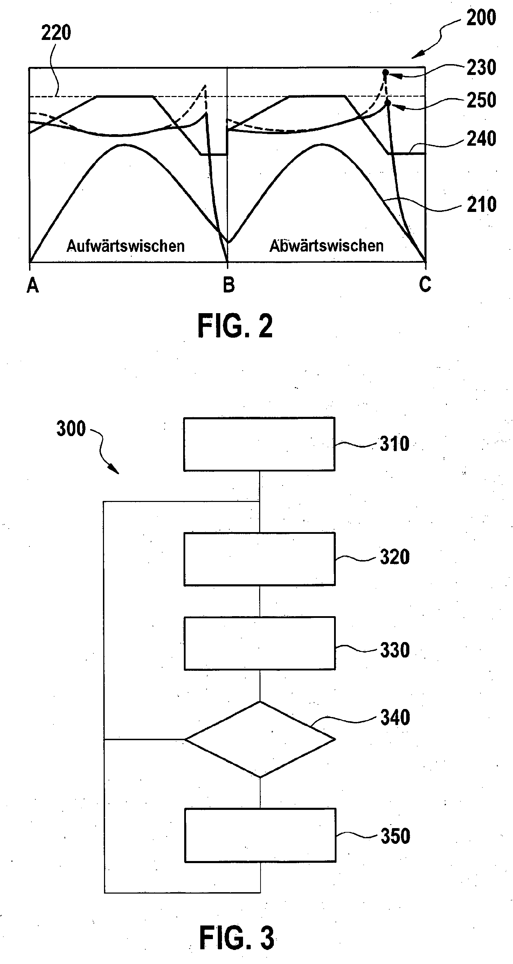

Fig. 2 zeigt ein Diagramm von Kräfte- bzw. Momentenverläufen an der Scheibenwischvorrichtung 110 aus Fig. 1. In einer horizontalen Richtung ist eine Stellung der Wischerwelle 130 der Scheibenwischvorrichtung 110 aus Fig. 1 angetragen. Eine erste Stellung A entspricht einer Stellung in Fig. 1, in der der Abtriebshebel 145 in der am weitesten links,gelegenen Position steht. Eine zweite Stellung B entspricht der Stellung des Abtriebshebels 145, die in Fig. 1 mit durchgezogenen Linien dargestellt ist und oben als zweite Stellung beschrieben ist. Eine dritte Stellung C in Fig. 2 entspricht der Stellung A, nachdem der Abtriebshebel 145 von seiner extremen rechten Position in die extreme linke Position zurückverbracht wurde. Eine Drehrichtung des Abtriebshebels 145 ist dabei ohne Belang. In vertikaler Richtung ist in Fig. 2 ein Moment (Drehmoment) bzw. eine Kraft angeträgen.

Bei einem üblichen Betrieb der Scheibenwischvorrichtung 110 aus Fig. 1 dreht die Antriebseinrichtung 120 die Antriebskurbel 135 mit konstanter Geschwindigkeit in eine Richtung, so dass die Wischerwelle 130 von der Stellung A in die Stellung B und von dort in die Stellung C verbracht wird. Da die Stellung C der Stellung A entspricht, setzt sich der Verlauf der Stellungen der Wischerwelle 130 bei der Stellung A in Fig. 2 fort. Nachdem das Getriebe 125 aus Fig. 1 nicht gleichförmig überträgt, sind eine Winkelgeschwindigkeit der Wischerwelle 130 und ein durch die Wischerwelle 130 übertragenes Moment jeweils von der Stellung der Wischerwelle 130 abhängig.

Ein erster Verlauf 210 zeigt einen Momentenbedarf der Antriebseinrichtung 120 aus Fig. 1. Von der Stellung A aus steigt der Momentenbedarf 210 von Null zunächst relativ steil an, erreicht ein lokales Maximum etwa auf halbem Wege zwischen den Stellungen A und B und fällt dann zur Stellung B wieder stark ab, wobei der in der Stellung B erreichte Wert etwas größer als Null ist. Von der Stellung B aus steigt der Momentenbedarf 210 wieder stark an, bildet ein weiteres lokales Maximum etwa auf halbem Weg zwischen den Stellungen B und C und fällt dann zur Stellung C wieder stark ab, bis er Null erreicht. Der Verlauf des Momentenbedarfs 210 der Antriebseinrichtung 120 ist hauptsächlich auf die ungleichförmige Übertragung von Kräften bzw. Momenten durch das in Fig. 1 dargestellte Getriebe 125 zurückzuführen.

Wird das von der Antriebseinrichtung 120 abgegebene Drehmoment auf ein konstantes Antriebsmoment 220 begrenzt, so ergibt sich ein Belastungsverlauf 230, der einem Verlauf von Zug- bzw. Schubkräften im Gestänge 140 entspricht und für eine Gesamtbelastung der Scheibenwischvorrichtung 110 repräsentativ ist. Zug- und Schubkräfte haben in der Darstellung in Fig. 2 gleiches Vorzeichen. Es ist deutlich, dass der Belastungsverlauf 230 jeweils kurz vor Erreichen der Stellung B bzw. C durch die Wischerwelle 130 eine besonders hohe Belastungsspitze aufweist. In einem tatsächlichen Wischersystem 100 kann diese Belastungsspitze ca. 20°-30° vor Erreichen der Stellung B bzw. C durch die Wischerwele 130 auftreten. Diese Belastungsspitzen können zusätzlich verstärkt werden, wenn sich beispielsweise Ablagerungen im Bereich der Wendepunkte eines Wischerblattes ansammeln, welches mittels der Wischerwelle 130 in einer oszillierenden Bewegung über ein Kreissegment einer Sichtscheibe des Kraftfahrzeugs 105 geführt wird. Solche Ablagerungen können beispielsweise durch nasses Laub oder durch Schnee oder Eis gebildet werden. Nach Erreichen der Belastungsspitze fällt der Belastungsverlauf 230 jeweils auf einen Wert nahe oder gleich Null ab.

Wie allgemein bekannt ist, ist ein materialbedingter Verschleiß an Maschinenelementen insbesondere dann verstärkt zu beobachten, wenn große Belastungsspitzen verarbeitet werden müssen. Bereits eine relativ moderate Beschränkung solcher Leistungsspitzen kann zu einer drastischen Verlängerung der Lebensdauer des Elements führen, so dass die niedrigeren Belastungen sehr viel häufiger durch das Maschinenelement vollbracht werden können, bevor das Maschinenelement verschlissen ist.

Mit Hilfe eines adaptiven Motormoments kann ein von der Antriebseinrichtung 120 abgebbares Drehmoment beispielsweise auf den Verlauf 240 begrenzt werden. Der Verlauf 240 besteht aus mehreren linearen Segmenten und liegt oberhalb des Verlaufs 210 des Momentenbedarfs der Antriebseinrichtung 120. Aus dem Verlauf 240 ergibt sich ein Belastungsverlauf 250 in der Scheibenwischvorrichtung 110 entsprechend dem oben beschriebenen Belastungsverlauf 230 bei konstantem Motormoment 220. Die Belastungsspitze vor Erreichen der Positionen B bzw. C durch die Wischerwelle 130 ist signifikant verringert und auch eine relativ hohe Belastung im Bereich kurz nach Verlassen der Stellung A bzw. B ist vermindert.

Fig. 3 zeigt ein Ablaufdiagramm eines Verfahrens 300 an der Scheibenwischvorrichtung 110 aus Fig. 1. Das Verfahren 300 kann beispielsweise durch die Steuerung 115 aus Fig. 1 durchgeführt werden.

Das Verfahren 300 umfasst Schritte 310 bis 350.

Im ersten Schritt 310 befindet sich das Verfahren 300 im Startzustand. Im anschließenden Schritt 320 wird ein vorbestimmtes Drehmoment in Abhängigkeit einer Stellung der Wischerwelle 130 bestimmt. Dazu kann eine Stellung der Wischerwelle 130 bestimmt werden, beispielsweise mittels des Abtasters 155. Ein der bestimmten Stellung zugeordnetes Drehmoment wird dann aus dem Speicher 165 abgerufen. Im Speicher 165 können tabellarische oder formelhafte Zuordnungen vorliegen, aus denen von einer bestimmten Stellung der Wischerwelle 130 auf das vorbestimmte Drehmoment geschlossen werden kann.

Im Schritt 330 wird das von der Antriebseinrichtung 120 abgegebene Drehmoment bestimmt. Das abgegebene Drehmoment kann beispielsweise auf der Basis einer der Antriebseinrichtung 120 von der Ansteuerung 150 zugeführten elektrischen Leistung bestimmt werden. Andere Bestimmungen des abgegebenen Drehmoments sind ebenfalls möglich, beispielsweise auf der Basis einer der Antriebseinrichtung 120 zugeführten Spannung in Verbindung mit einer Drehgeschwindigkeit der Antriebseinrichtung 120.

Im Schritt 340 wird das vorbestimmte Drehmoment mit dem abgegebenen Drehmoment verglichen. Ist das abgegebene Drehmoment kleiner oder gleich dem vorbestimmten Drehmoment, so kehrt das Verfahren zum Schritt 320 zurück und kann erneut durchlaufen. Andernfalls, wenn das abgegebene Drehmoment größer als das vorbestimmte Drehmoment ist, wird vor dem Zurückkehren zum Schritt 320 im Schritt 350 die Drehrichtung der Antriebseinrichtung 120 umgekehrt. Dadurch durchlaufen die Stellungen der Wischerwelle 130 nur noch einen kleineren Winkelbereich als mechanisch ohne Drehrichtungsumkehr möglich ist. Im wahrscheinlichen Fall eines Hindernisses im Bereich der extremen rechten und/oder extremen linken Position des Abtriebshebels 145 in Fig. 1 werden die in Fig. 2 dargestellten Belastungsspitzen durch die vorzeitige Drehrichtungsumkehr vermieden, wobei sich der gereinigte Bereich der Sichtscheibe des Kraftfahrzeugs 105 einseitig oder zweiseitig verkleinert.

Es ist Kern der Erfindung, eine Drehrichtungsumkehr (ein Reversieren) der Antriebseinrichtung 120 bevorzugt dann vorzunehmen, wenn eine durch äußere Einflüsse zusätzliche Belastung auf das Wischersystem 100 eine besonders große Belastung für die Scheibenwischvorrichtung 110 bedingt. In Stellungen der Wischerwelle 130, in denen ein Hindernis nur eine moderate Mehrbelastung der Scheibenwischvorrichtung 110 bedeutet, nämlich in einem Mittenbereich zwischen der extremen linken und der extremen rechten Position des Abtriebshebels 145, soll eine Drehrichtungsumkehr vermieden werden, um die Wischfunktion des Scheibenwischersystems 100 zu optimieren. Dazu können im Schritt 340 noch zusätzliche Kriterien ausgewertet werden, wie im Folgenden aufgezeigt wird.

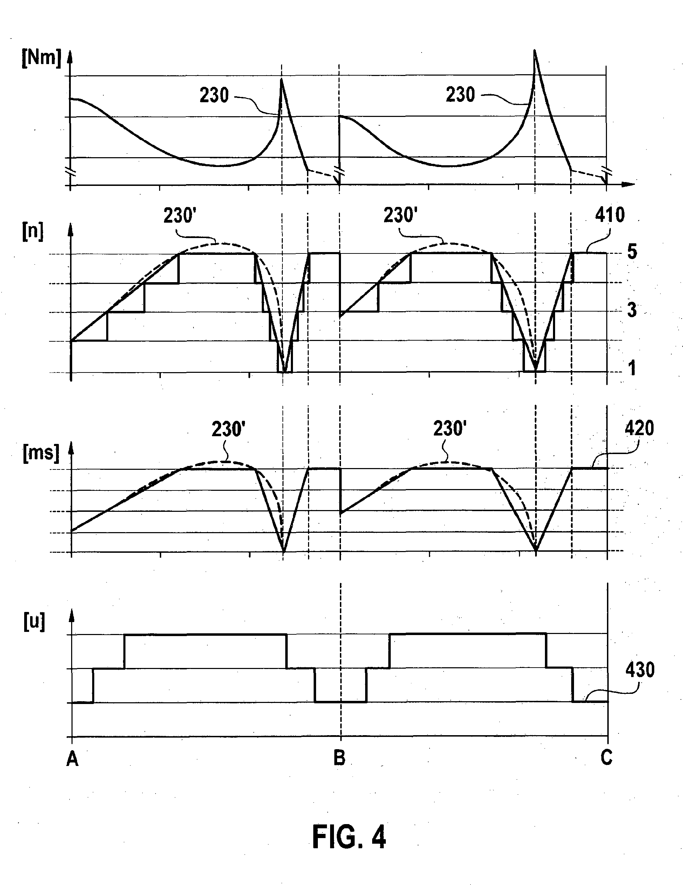

Fig. 4 zeigt ein Diagramm 400 von Vergleichsgrundlagen für das Verfahren 300 aus Fig. 3 an der Scheibenwischvorrichtung 110 aus Fig. 1.

Das Diagramm 400 entspricht qualitativ dem Diagramm 200 aus Fig. 2. Zur Orientierung ist in einem oberen Bereich des Diagramms 400 der Belastungsverlauf 230 bei konstantem Motormoment angetragen.

Ein Verlauf 410 zeigt vorbestimmte Häufigkeiten, die für eine Steuerung der Drehrichtungsumkehr der Antriebseinrichtung 120 verwendet werden, in Abhängigkeit der Stellung der Wischerwelle 130. Der im Wesentlichen treppenförmige Häufigkeitsverlauf 410 orientiert sich an einem Verlauf 230', der aus dem Belastungsverlauf 230 durch Spiegeln an einer horizontalen Achse hervorgeht. Qualitativ gibt der Häufigkeitsverlauf 410 eine hohe Häufigkeit an, wenn der Belastungsverlauf 230 einen geringen Wert anzeigt und umgekehrt. Der Häufigkeitsverlauf 410 bezeichnet, wie oft ein von der Antriebseinrichtung 120 abgegebenes Drehmoment das vorbestimmte Drehmoment übersteigen muss, bevor eine Drehrichtungsumkehr an der entsprechenden Stellung ausgelöst wird.

Die in Fig. 4 angegebenen Werte für die Häufigkeiten des Häufigkeitsverlaufs 410 sind exemplarisch. Während in einem Bereich etwa in der Mitte zwischen den Stellungen A und B oder in der Mitte zwischen den Stellungen B und C das von der Antriebseinrichtung 120 abgegebene Drehmoment wenigstens fünfmal das vorbestimmte Drehmoment überschreiten muss, um eine Drehrichtungsumkehr der Antriebseinrichtung 120 zu bewirken, genügt im Bereich der höchsten Belastungen des Belastungsverlaufs 230 jeweils etwa 30° vor Erreichen der Position B oder C ein einziges Überschreiten, um eine Drehrichtungsumkehr zu bewirken.

Ein weiter in Fig. 4 dargestellter Verdichtungszeitverlauf 420 gibt an, wie lange das von der Antriebseinrichtung 120 abgegebene Drehmoment das vorbestimmte Drehmoment überschreiten muss, damit eine Drehrichtungsumkehr der Antriebseinrichtung 120 bewirkt wird. Der Verdichtungszeitverlauf 420 ist von der Stellung der Wischerwelle 130 abhängig und weist im dargestellten Beispiel eine segmentweise lineare Form auf. Da eine Verdichtungszeit des Verdichtungszeitverlaufs 420 im Gegensatz zu einer Häufigkeit des Häufigkeitsverlaufs 410 auch durch nicht diskrete Werte vorgegeben werden kann, kann der Verdichtungszeitverlauf 420 eine beliebige Form annehmen, insbesondere kann er auch vollständig dem Verlauf 230' folgen. Der gewählte Verdichtungszeitverlauf 420 sichert ein relativ gutes Verdichten von Fremdkörpern, welche eine Bewegung der Wischerwelle 130 beeinträchtigen, im Bereich der extrem linken und extrem rechten Stellung des Abtriebshebels 145, während gleichzeitig Belastungsspitzen auf die Scheibenwischvorrichtung 110 vermieden werden.

In einer Ausführungsform wird zusätzlich zum Momentenverlauf 240 aus Fig. 2 der Häufigkeitsverlauf 410 und/oder der Verdichtungszeitverlauf 420 berücksichtigt. Eine Drehrichtungsumkehr der Antriebseinrichtung 120 erfolgt dann, wenn das von der Antriebseinrichtung 120 abgegebene Drehmoment häufiger als durch den Häufigkeitsverlauf 410 angegebenen und/oder länger als durch den Verdichtungszeitverlauf 420 angegeben ist, das vorgegebene Drehmoment 240 übersteigt.

In einem unteren Bereich des Diagramms 400 ist ein Häufigkeitsverlauf 430 gezeigt, der für eine Umkehrsteuerung einer Scheibenwischvorrichtung 110 verwendet werden kann, deren Getriebe 125 eine gleichförmige Kraftübertragung sicherstellt, beispielsweise bei einem Stirnradgetriebe. Zwischen den Stellungen A und B bzw. B und C ist der Häufigkeitsverlauf 430 jeweils in horizontaler Richtung symmetrisch. Der Häufigkeitsverlauf 430 kann ansonsten wie oben ausgeführt mit einem entsprechenden Momentenverlauf und optional zusätzlich mit einem entsprechenden Verdichtungszeitverlauf kombiniert werden, um eine Drehrichtungsumkehr der verwendeten Antriebseinrichtung 120 zu bewirken.

## Patentansprüche

1. Steuerung (115) für eine Scheibenwischvorrichtung (110), wobei die Scheibenwischvorrichtung (110) eine Antriebseinrichtung (120) und ein Getriebe (125) umfasst, das die Bewegung der Antriebseinrichtung (120) auf eine Wischerwelle (130) überträgt, und die Steuerung (115) folgendes umfasst:
- eine Vergleichseinrichtung (160) zum Bestimmen, ob das von der Antriebseinrichtung (110) abgegebene Drehmoment das vorbestimmte Drehmoment öfter als eine vorbestimmte Häufigkeit übersteigt,
- wobei das vorbestimmte Drehmoment und die Häufigkeit von der Stellung der Wischerwelle (130) abhängig sind, und
- eine Umkehreinrichtung (150) zum Umkehren der Drehrichtung der Antriebseinrichtung (120) in Abhängigkeit des Ergebnisses der Vergleichseinrichtung (160).

2. Steuerung (115) nach Anspruch 1, **dadurch gekennzeichnet, dass** einem hohen vorbestimmten Drehmoment eine niedrige vorbestimmte Häufigkeit zugeordnet ist.

3. Steuerung (115) nach Anspruch 1 oder 2, **dadurch gekennzeichnet, dass** die Vergleichseinrichtung (160) dazu eingerichtet ist, zu bestimmen, ob das von der Antriebseinrichtung (120) abgegebene Drehmoment das vorbestimmte Drehmoment länger als eine vorbestimmte Zeit übersteigt.

4. Verfahren zur Steuerung einer Scheibenwischvorrichtung (110), wobei die Scheibenwischvorrichtung (110) eine Antriebseinrichtung (120) und ein Getriebe (125) umfasst, das die Bewegung der Antriebseinrichtung (120) auf eine Wischerwelle (130) überträgt, folgende Schritte umfassend:
- Bestimmen (320) eines von der Stellung der Wischerwelle (130) abhängigen vorbestimmten Drehmoments und
- Vergleichen (340), ob das von der Antriebseinrichtung (120) abgegebene Drehmoment das vorbestimmte Drehmoment öfter als eine vorbestimmte Häufigkeit übersteigt, wobei die Häufigkeit von der Stellung der Wischerwelle (130) abhängig ist, und
- Umkehren (350) der Drehrichtung der Antriebseinrichtung (120) in Abhängigkeit des Ergebnisses des Vergleichs.

5. Verfahren (300) nach Anspruch 4, **dadurch gekennzeichnet, dass** einem hohen vorbestimmten Drehmoment eine niedrige vorbestimmte Häufigkeit zugeordnet ist.

6. Verfahren (300) nach einem der Ansprüche 4 oder 5, **gekennzeichnet durch** ein Vergleichen (340), ob das Drehmoment der Antriebseinrichtung (120) das vorbestimmte Drehmoment länger als eine vorbestimmte Zeit übersteigt.

7. Verfahren (300) nach Anspruch 6, **dadurch gekennzeichnet, dass** einem hohen vorbestimmten Drehmoment eine kurze vorbestimmte Zeit zugeordnet ist.

8. Verfahren (300) nach einem der Ansprüche 4 bis 7, **dadurch gekennzeichnet, dass** das von der Antriebseinrichtung (120) abgebbare Drehmoment auf ein weiteres, von der Stellung der Wischerwelle (130) abhängiges vorbestimmtes Drehmoment begrenzt wird.

9. Verfahren (300) nach Anspruch 8, wobei das vorbestimmte Drehmoment kleiner als das weitere vorbestimmte Drehmoment ist.

## Claims

1. Controller (115) for a windshield wiping device (110), wherein the windshield wiping device (110) comprises a drive device (120) and a gear (125) which transmits the movement of the drive device (120) to a wiper shaft (130), and the controller (115) comprises the following:
- a comparison device (160) for determining whether the torque which is output by the drive device (110) exceeds the predetermined torque more often than a predetermined frequency,
- wherein the predetermined torque and the frequency are dependent on the position of the wiper shaft (130), and
- a reversing device (150) for reversing the direction of rotation of the drive device (120) as a function of the result of the comparison device (160).

2. Controller (115) according to Claim 1, **characterized in that** a low predetermined frequency is assigned to a high predetermined torque.

3. Controller (115) according to Claim 1 or 2, **characterized in that** the comparison device (160) is configured to determine whether the torque which is output by the drive device (120) exceeds the predetermined torque for longer than a predetermined time.

4. Method for controlling a windshield wiping device (110), wherein the windshield wiping device (110) comprises a drive device (120) and a gear (125) which transmits the movement of the drive device (120) to a wiper shaft (130), comprising the following steps:
- determination (320) of a predetermined torque which is dependent on the position of the wiper shaft (130), and
- comparison (340) to determine whether the torque which is output by the drive device (120) exceeds the predetermined torque more often than a predetermined frequency, wherein the frequency is dependent on the position of the wiper shaft (130), and
- reversal (350) of the direction of rotation of the drive device (120) as a function of the result of the comparison.

5. Method (300) according to Claim 4, **characterized in that** a low predetermined frequency is assigned to a high predetermined torque.

6. Method (300) according to one of Claims 4 and 5, **characterized by** a comparison (340) to determine whether the torque of the drive device (120) exceeds the predetermined torque for longer than a predetermined time.

7. Method (300) according to Claim 6, **characterized in that** a short predetermined time is assigned to a high predetermined torque.

8. Method (300) according to one of Claims 4 to 7, **characterized in that** the torque which can be output by the drive device (120) is limited to a further predetermined torque which is dependent on the position of the wiper shaft (130).

9. Method (300) according to Claim 8, wherein the predetermined torque is lower than the further predetermined torque.

## Revendications

1. Commande (115) pour un dispositif d'essuie-glace (110), le dispositif d'essuie-glace (110) comprenant un dispositif d'entraînement (120) et une transmission (125) qui transmet le mouvement du dispositif d'entraînement (120) à un arbre d'essuie-glace (130), la commande (115) comprenant
- un système de comparaison (160) pour déterminer si le couple fourni par le dispositif d'entraînement (110) dépasse le couple prédéterminé plus souvent qu'une fréquence prédéterminée,
- le couple prédéterminé et la fréquence dépendant de la position de l'arbre d'essuie-glace (130), et
- un système d'inversion (150) pour inverser le sens de rotation du dispositif d'entraînement (120) en fonction du résultat du système de comparaison (160).

2. Commande (115) selon la revendication 1, **caractérisée en ce qu'**une faible fréquence prédéterminée est associée à un couple prédéterminé élevé.

3. Commande (115) selon la revendication 1 ou 2, **caractérisée en ce que** le système de comparaison (160) est prévu pour déterminer si le couple fourni par le dispositif d'entraînement (120) dépasse le couple prédéterminé pendant plus longtemps qu'une période prédéterminée.

4. Procédé pour commander un dispositif d'essuie-glace (110), le dispositif d'essuie-glace (110) comprenant un dispositif d'entraînement (120) et une transmission (125) qui transmet le mouvement du dispositif d'entraînement (120) à un arbre d'essuie-glace (130), comprenant les étapes suivantes :
- déterminer (320) un couple prédéterminé en dépendant de la position de l'arbre d'essuie-glace (130) et
- comparer (340) si le couple fourni par le dispositif d'entraînement (120) dépasse le couple prédéterminé plus souvent qu'une fréquence prédéterminée, la fréquence dépendant de la position de l'arbre d'essuie-glace (130), et
- inverser (350) le sens de rotation du dispositif d'entraînement (120) en fonction du résultat de la comparaison.

5. Procédé (300) selon la revendication 4, **caractérisé en ce qu'**une faible fréquence prédéterminée est associée à un couple prédéterminé élevé.

6. Procédé (300) selon l'une quelconque des revendications 4 ou 5, **caractérisé par** le fait de comparer (340) si le couple du dispositif d'entraînement (120) dépasse le couple prédéterminé pendant plus longtemps qu'une période prédéterminée.

7. Procédé (300) selon la revendication 6, **caractérisé en ce qu'**une période prédéterminée courte est associée à un couple prédéterminé élevé.

8. Procédé (300) selon l'une quelconque des revendications 4 à 7, **caractérisé en ce que** le couple pouvant être fourni par le dispositif d'entraînement (120) est limité à un couple prédéterminé supplémentaire dépendant de la position de l'arbre d'essuie-glace (130).

9. Procédé (300) selon la revendication 8, dans lequel le couple prédéterminé est inférieur au couple prédéterminé supplémentaire.
